# EUROPEAN PATENT APPLICATION

(11) **EP 3 254 999 A1**
(43) Date of publication of application: **13.12.2017**
(21) Application number: 16173632.7
(22) Date of filing: 09.06.2016
(51) Int. Cl.: B65G 54/02, H02K 41/03, H02K 15/03, H02K 15/00

(54) **A METHOD FOR SERVICING A LINEAR MOTOR DEVICE AND A METHOD FOR PREPARING A LINEAR MOTOR DEVICE**

(71) Applicant: Tetra Laval Holdings & Finance S.A., 1009 Pully (CH)
(72) Inventor: Fontanazzi, Paolo, IT-41125 Modena (IT); Pradelli, Massimo, IT-42122 Reggio Emilia (IT); Pedretti, Richard John, IT-41043 Formigine (MO) (IT); Rimondi, Fabrizio, IT-40024 Castel San Pietro Terme (BO) (IT); Ricci, Curbastro Fabio, IT-40064 Ozzano dell'Emilia (BO) (IT)
(74) Representative: Tetra Pak - Patent Attorneys SE

(57) **Abstract**

There is described a method of preparing a linear motor device (1) comprising a circulating carrier (2) having an outer surface (3) and at least one cart (4) movably mounted to the circulating carrier (2). The cart (4) has a cart base (13) movably and reversibly mountable onto the circulating carrier and having a main portion (22) and a reversible side portion (23). The method comprises the steps of placing main portion (22) on the circulating carrier (2) and by connecting the removable side portion (23) to the main portion (22). Furthermore, there is described a method of servicing the linear motor device (1) by disconnecting the removable side portion (23) from the main portion (22) and removing the main portion (22) from the circulating carrier (2).

## Description

### TECHNICAL FIELD

The present invention relates to a method for servicing a linear motor device and a method for preparing a linear motor device, in particular a linear motor device for packaging machines.

The present invention relates, in particular to the dismounting of a movable cart of the linear motor device comprising a base carrier and a magnet assembly from a circulating carrier of the linear motor device or to the mounting of the movable cart onto the circulating carrier of the linear motor device.

### BACKGROUND ART

In the recent years, linear motor devices have gained importance in packaging machines as they permit a significant increase in the flexibility of operation of packaging machines.

Linear motor devices typically comprise a circulating carrier and a plurality of movable carts arranged on the carrier and configured to advance along the circulating carrier.

Commonly, the circulating carrier comprises a plurality of coil assemblies and each movable cart has a respective magnet assembly adapted to cooperate with the coil assemblies. The coil assemblies are controlled in such a manner to selectively and, in particular independently from the other movable carts, advance each movable cart along the circulating carrier. Thus, it is e.g. possible to vary the speed, within certain limits, of each movable cart independently from the speed of the other movable carts.

Commonly, each cart carries at least one operative unit for performing an operation within the packaging machine. As the carts are advanced along the circulating carrier independently from each other, also each operative unit is advanced independently from the other operative units.

In the case of the occurrence of a malfunction of the cart or, in particular, the operative unit or in the case of the need to replace the operative unit with another operative unit it is often necessary to remove the complete cart from the circulating carrier. As well, prior to the use of the linear motor device it is necessary to mount the one or more carts onto the circulating carrier. As well, after removing one cart from the circulating carrier it is often necessary to mount a new cart or the same cart to the circulating carrier. Thus, operators often need to handle (mounting/dismounting) the carts so that the linear motor device can be operated in the desired manner.

As the weights of these carts are significant and as the magnetic flied strength of the magnet assembly and, accordingly, the force of attraction between the magnet assembly and the circulating carrier are typically elevated, the operators must handle the carts with great care in order to avoid possible injuries during the maintenance of the linear motor device. Still, the operators are subjected to rather high risks of injuries during the handling of the carts.

Thus, a need is felt in the sector, to provide for linear motor devices being easily serviced and/or prepared. In particular, there is a need of facilitating the mounting and dismounting of the movable carts to or from the circulating carrier.

Additionally, the need is felt to limit the risk of injuries possibly occurring to operators during the servicing and/or preparation of the linear motor devices.

### DISCLOSURE OF INVENTION

It is therefore an object of the present invention to provide a method for servicing a linear motor device and a method for preparing a linear motor device that allows facilitating the maintenance of linear motor devices and limiting the risk of the operator getting injured during the servicing and/or preparation works.

According to the present invention, there is provided a method for servicing a linear motor device as claimed in claim 1.

Additionally, according to present invention, there is provided a method for preparing a linear motor device as claimed in claim 11.

### BRIEF DESCRIPTION OF THE DRAWINGS

A non-limiting embodiment of the present invention will be described by way of example with reference to the accompanying drawings, in which:
Figure 1 shows a perspective view of a linear motor device having a circulating carrier and a plurality of movable carts mounted to the circulating carrier, with parts removed clarity;
Figures 2 to 8 show different phases of dismounting one cart of the linear motor device of Figure 1 from the circulating carrier of the linear motor device, with parts removed for clarity; and
Figures 9 to 15 show different phases of mounting one cart of the linear motor device of Figure 1 to the circulating carrier of the linear motor device, with parts removed for clarity.

### BEST MODES FOR CARRYING OUT THE INVENTION

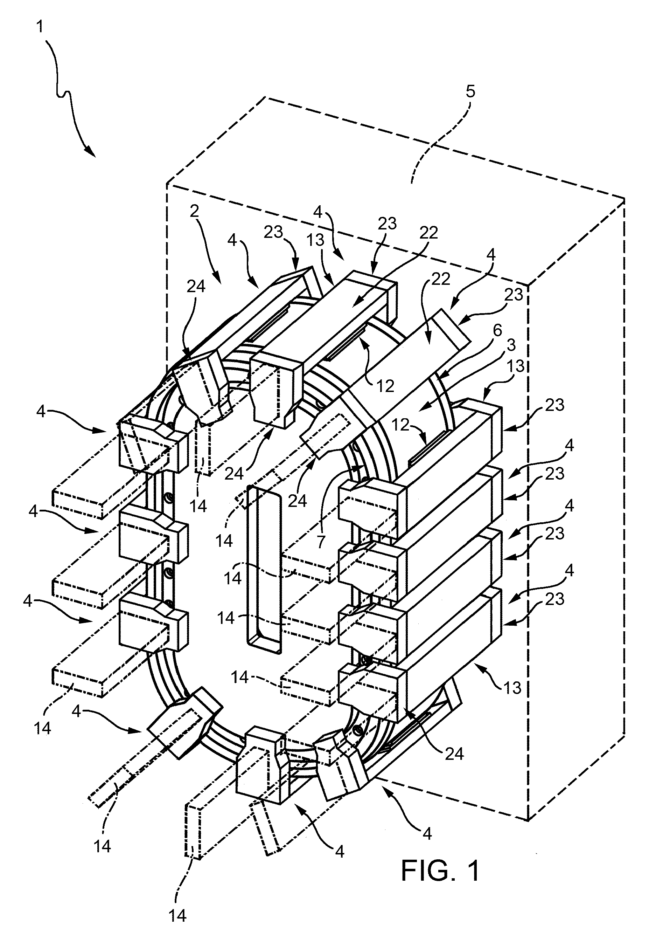

Number 1 in Figure 1 shows as a whole a linear motor device. Linear motor device 1 comprises:
- an endless circulating carrier 2 having an outer surface 3; and
- a plurality of movable carts 4 movably mounted to carrier 2 and adapted to advance along carrier 2.

Linear motor device 1 also comprises a support structure 5 carrying carrier 2.

In more detail, circulating carrier 2 comprises a first endless guide rail 6 and a second endless guide rail 7 arranged side by side and spaced apart from each other and adapted to guide advancement of carts 4 along carrier 2. In particular, guide rails 6 and 7 are configured to moveably carry carts 4.

More specifically, guide rails 6 and 7 are arranged parallel to each other and each one comprises a plurality of straight segments 6a, 7a and curved segments 6b, 7b.

Furthermore, each cart 4 is configured to engage carrier 2 along at least a front portion 8 and along at least a rear portion 9 of carrier 2.

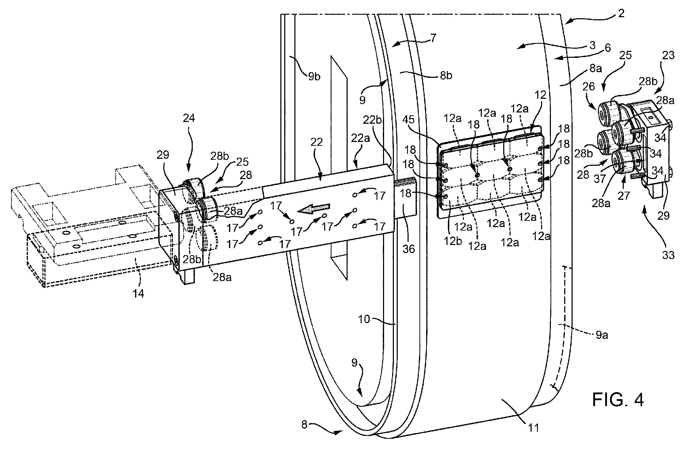

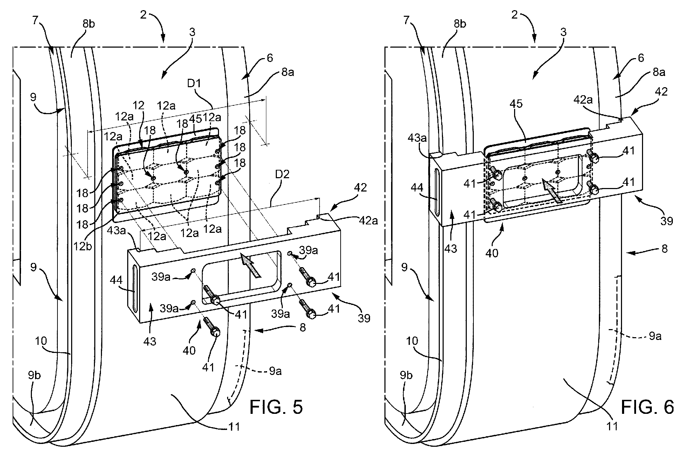

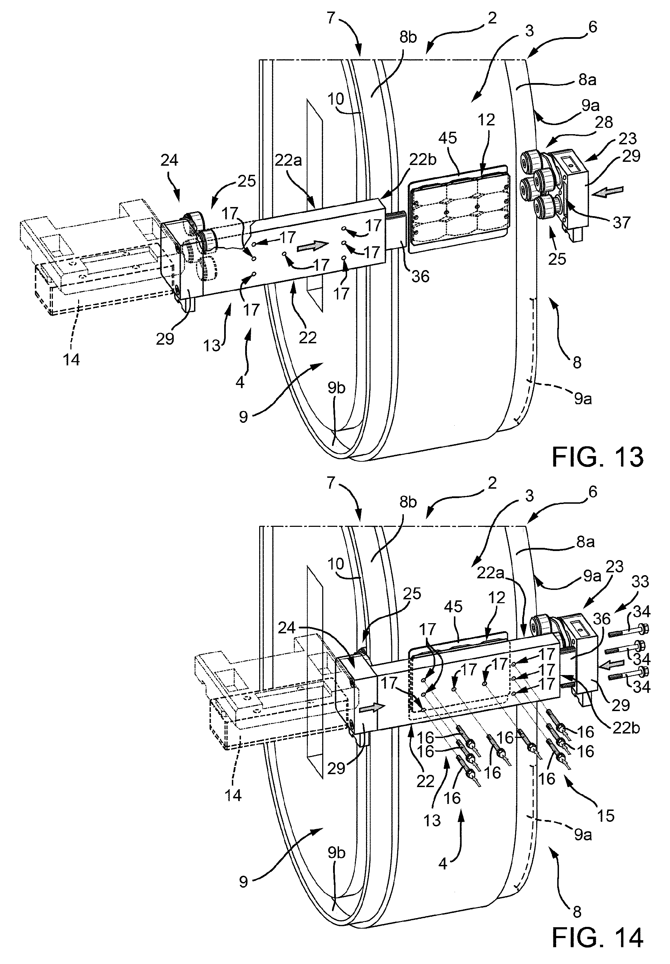

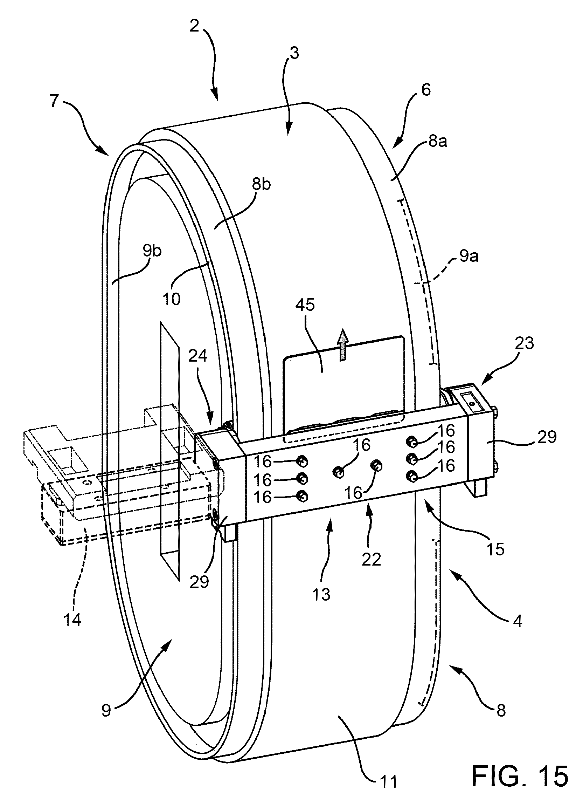

More specifically, guide rails 6 and 7 have respective front portions 8a, 8b and respective rear portions 9a, 9b defining at least partially front portion 8 and rear portion 9, respectively. In particular, the respective front portions 8a and 8b of guide rails 6 and 7 substantially face towards carts 4 mounted to carrier 2 and the respective rear portions 9a and 9b substantially face away from carts 4 mounted to carrier 2. Guide rails 6 and 7 also have respective outer lateral portions 10 (only outer lateral portion 10 of guide rail 7 is shown in Figures 1 to 15) and inner lateral portions. In particular, inner lateral portions are arranged to face each other and outer lateral portions 10 are arranged to point away from each other. Furthermore, the distance between outer lateral portions 10 define an outer distance D1 of guide rails 6 and 7.

As well, carrier 2 has a plurality of coil assemblies (not shown) adapted to selectively generate electromagnetic fields and to interact with carts 4 for advancing carts 4 along carrier 2. In particular, the coil assemblies are arranged between guide rails 6 and 7.

In particular, the coil assemblies can be selectively excited (or energized) so as to advance carts 4 along carrier 2 independently from each other.

Additionally, carrier 2 comprises a cover 11 arranged between guide rails 6 and 7. More specifically, cover 11 surrounds the coil assemblies and cover 11 contacts the inner portions of guide rails 6 and 7. In particular, cover 11 defines at least partially outer surface 3.

With particular reference to Figures 1 to 4 and 13 to 15, each cart 4 comprises:
- a magnet assembly 12 adapted to interact with carrier 2, in particular with the coil assemblies of carrier 2; and
- a cart base 13 adapted to be movably and reversibly mounted onto carrier 2, adapted to move along carrier 2 and configured to removably couple to magnet assembly 12.

Each magnet assembly 12 is configured to interact with carrier 2, in particular with the coil assemblies of carrier 2 for controlling advancement of the respective cart 4 along carrier 2.

In more detail, each magnet assembly 12 comprises a plurality of magnet elements 12a arranged together on a support plate 12b. It should be noted that each magnet assembly 12 could also be replaced by one single magnet element having the needed characteristics (e.g. magnetic field strength) to allow operation of device 1.

Furthermore, each cart base 13 is adapted to engage with at least one of guide rails 6, 7, preferably with both guide rails 6 and 7.

As well, each cart base 13 is configured to couple to magnet assembly 12 in such a manner that the respective magnet assembly 12 is spaced apart from outer surface 3 with cart base 13 engaging carrier 2, in particular guide rails 6 and 7.

With particular reference to Figures 1 to 4 and 13 to 15, each cart 4, in particular the respective cart base 13, comprises an operative unit 14 adapted to perform an operation, in particular within the packaging machine.

Furthermore, each cart 4 comprises a plurality of removable connecting means 15 adapted to removably connect the respective cart base 13 with the respective magnet assembly 12. In particular, connecting means 15 are adapted to gradually loose or fasten the respective cart base 13 with the respective magnet assembly 12.

More specifically, each one of connecting means 15 comprise a plurality of fixing members 16, in the specific example shown eight screws, each one being configured to extend through one respective through-hole 17 of the corresponding cart base 13 and to interact with a respective interaction zone 18, in particular a threaded hole provided on the respective magnet assembly 12, in particular on the respective support plate 12b.

Furthermore, each cart base 13 comprises:
- a main portion 22 being adapted to removably connect to the respective magnet assembly 12; and
- at least one removable side portion 23 removably connected to respective main portion 22.

In particular, each main portion 22 is designed to connect to the respective magnet assembly 12 along a lower side 22a of main portion 22, the lower side 22a facing outer surface 3 with cart base 13 being mounted on carrier 2. Furthermore, each main portion 22 carries through-holes 17 of the respective cart base 13.

As well, the respective main portion 22 of each cart base 13 is configured to engage with carrier 2, in particular with front portion 8 of carrier 2. In more detail, each main portion 22 is adapted to engage with guide rails 6 and 7, in particular with the respective front portions 8a and 8b.

As well, each cart base 13 comprises an additional side portion 24 connected to respective main portion 22 and being arranged opposite of respective removable side portion 23. In the embodiment disclosed, each additional side portion 24 is removably connected to the respective main portion 22. Alternatively, each additional side portion 24 could also be fixedly connected to the respective main portion 22.

Preferably, additional side portion 24 is configured to carry respective operative unit 14.

Furthermore, removable side portion 23 is adapted to contact a first contact surface 22b provided on main portion 22. As well, additional side portion 24 is configured to contact a second contact surface (not shown) provided on main portion 22 opposite of first contact surface 22b.

In particular, each cart base 13 has a C-shaped configuration. The C-shaped configuration of each cart base 13 being defined by the respective additional side portion 24, the respective main portion 22 and the respective removable side portion 23.

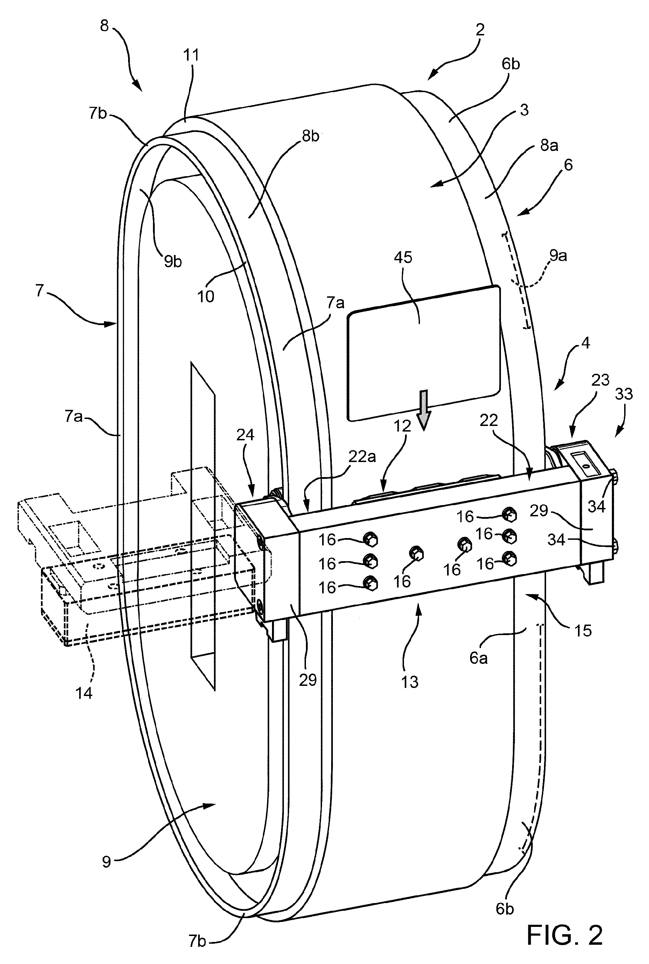

With particular reference to Figures 2 to 4 and 13 to 15, each removable side portion 23 has a respective engagement section 25 having a substantially C-shaped profile. Furthermore, each removable side portion 23, in particular the respective engagement section 25 is configured to engage guide rail 6 along at least front portion 8a and along at least rear portion 9a.

In even more detail, each removable side portion 23, in particular the respective engagement section 25, has a rear section 26 adapted to engage rear portion 9a and a front section 27 arranged opposite of rear section 26 and adapted to engage front portion 8a.

More specifically, each engagement section 25 comprises a wheel group 28 adapted to run along guide rail 6. More specifically, each wheel group 28 has a front pair of wheels 28a and a rear pair of wheels 28b. Each respective front pair of wheels 28a and the respective rear pair of wheels 28b are designed to sandwich in between guide rail 6. In particular, the respective rear pair of wheels 28b is designed to run along rear portion 9a and the respective front pair of wheels 28a is designed to run along front portion 8a.

Furthermore, each rear pair of wheels 28b defines the respective rear section 26 of the respective removable side portion 23, in particular of the respective engagement section 25 and each front pair of wheels 28a defines the respective front section 27 of the respective removable side portion 23, in particular of the respective engagement section 25.

Each removable side portion 23 also comprises a support base 29 designed to carry the respective wheel group 28 and configured to contact the respective main portion 22 of the corresponding cart base 13. In particular, each support base 29 is arranged orthogonal to the respective main portion 22. Even more particularly, each support base 29 is designed to abut with contact surface 22b of the respective main portion 22.

As additional side portions 24 are similar to removable side portions 23, we limit the description to the differences between them, and use the same references, where possible, for identical or corresponding parts.

The main difference between additional side portions 24 and removable side portions 23 lies in additional side portions 24 being adapted to engage with guide rail 7, while removable side portions 23 are configured to engage with guide rail 6. Accordingly, the respective engagement sections 25 of additional side portions 24 are configured to engage with guide rail 7, in particular the respective rear sections 26 are adapted to engage the respective rear portion 9b of guide rail 7 and the respective front sections 27 are adapted to engage the respective front portion 8b of guide rail 7. As well, the respective wheel groups 28 are adapted to run along guide rail 7 with the respective front pair of wheels 28a and the respective rear pair of wheels 28b being adapted to sandwich in between guide rail 7. Accordingly, the respective rear pair of wheels 28b is designed to run along lower portion 9b and the respective front pair of wheels 28a is designed to run along front portion 8b.

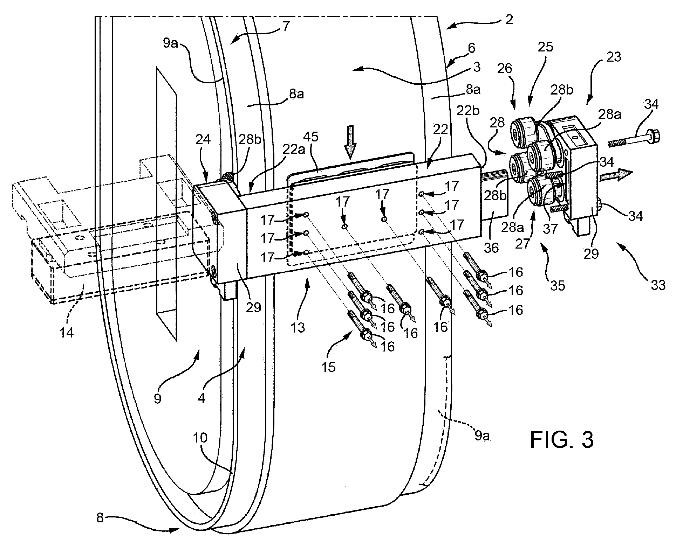

With particular reference to Figures 3, 4 and 14, each cart base 13 comprises coupling means 33 adapted to removably couple the respective removable side portion 23 to the respective main portion 22.

In more detail, coupling means 33 comprise a plurality of fastening members 34, in the particular example shown three screws, each one configured to extend through one respective passage within the corresponding removable side portion 23, in particular the respective support base 29. Furthermore, each fastening member 34 is configured to interact with a respective fastening zone (not shown), in particular threaded holes, provided on the respective main portion 22, in particular on the respective contact surface 22b.

Coupling means 33 also comprise a stabilizing device 35 adapted to further stabilize the connection of the respective removable side portion 23 with the respective main portion 22. Each stabilizing device 35 comprises a first coupling element, in particular a plate element 36 extending from the respective main portion 22 and a second coupling element, in particular a slit 37 provided within the respective removable side portion 23, more particularly within the corresponding support base 29. Each slit 37 is designed to house the respective plate element 36.

As well, each cart base 13 comprises additional coupling means configured to removably couple the respective additional side portion 24 to the respective main portion 22. The respective additional coupling means are substantially identical to coupling means 33 and are, therefore, not further described.

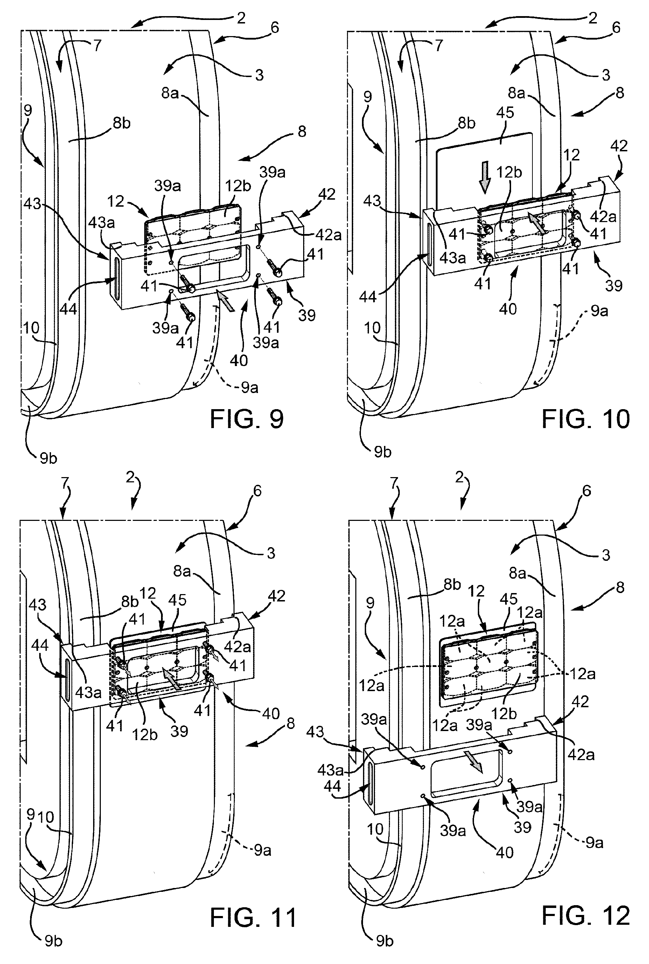

In use, device 1 needs to be prepared before operation. The steps required to prepare device 1 are shown in Figures 9 to 15. In particular, the preparation of device 1 comprises the step of placing carts 4 onto device 1. As the placing of each one single cart 4 is identical to the placing of the other carts 4, the placing of carts 4 is described by the example of the placing of one single cart 4 (see Figures 9 to 15).

Arranging cart base 13 on carrier 2 comprises the placing of main portion 22 on carrier 2 and removable side portion 23 is connected to main portion 22. In particular, main portion 22 is placed on carrier 2 so as to engage with carrier 2 along at least front portion 8. More specifically, main portion 22 is placed to engage with guide rails 6 and 7, in particular with the respective front portions 8a and 8b. Furthermore, removable side portion 23 is connected to main portion 23 in such a manner that removable side portion 23 engages carrier 2, in particular along at least front portion 8 and along at least rear portion 9 of carrier 2, even more particularly along both front portion 8a and rear portion 9a.

The connection between removable side portion 23 and main portion 22 is established by approaching removable side portion 23 towards main portion 22 and fastening coupling means 33, in particular fastening members 34, for removably connecting removable side portion 23 and main portion 22 with each other. More specifically, removable side portion 23 is moved in such a manner that plate element 36 of main portion 22 enters slit 37 of removable side portion 23. Then removable side portion 23 is further moved laterally towards main portion 22 until removable side portion 23, in particular support base 29, contacts first contact surface 22b. After that, coupling means 33, in particular fastening members 34, are fastened to secure main portion 22 and removable side portion 23 with each other. After fastening of fastening members 34, each one of fastening members 34 interacts with one respective fastening zone of main portion 22.

Furthermore, the placing of main portion 22 on carrier 2 requires approaching main portion 22 towards the circulating carrier 2 with main portion 22 being laterally shifted away from carrier 2. Then, main portion 22 is laterally shifted in such a manner that main portion 22 engages carrier 2 along at least front portion 8 of carrier 2.

Favorably, main portion 22 is placed on carrier 2 together with additional side portion 24 so that additional side portion 24 engages with guide rail 7, in particular with front portion 8b and rear portion 9b. However, alternatively, it would be possible to place main portion 22 on carrier 2 without additional side portion 24 being connected to main portion 22. Connecting additional side portion 24 to main portion 22, in particular by activation of the additional coupling means, would be established after the placing of main portion 22 on carrier 2. Connecting additional side portion 24 with main portion 22 could be done prior, simultaneously or after connecting removable side portion 23 to main portion 22.

Preferably, prior to placing cart base 13, in particular main portion 22, on carrier 2, magnet assembly 22 is placed over outer surface 3 and in particular, is retained over outer surface 3 by means of magnetic attraction. In particular, magnet assembly 22 is placed directly or indirectly on outer surface 3, in particular on cover 11, and is retained thereon by means of magnetic attraction. Cart base 13 is placed in such a manner that main portion 22 is arranged above magnet assembly 12. Then after placing of main portion 22 on carrier 2 main portion 22 is connected to magnet assembly 22. Alternatively, main portion 22 could be placed on carrier 2 while being already connected to magnet assembly 12.

In particular, an assistant carrier 39 is used for placing magnet assembly 12 over outer surface 3.

In more detail, assistant carrier 39 is adapted to removably connect to the respective magnet assembly 12. Assistant carrier 39 comprises linking means 40 designed to removably connect assistant carrier 39 to magnet assembly 12. In particular, linking means 40 comprise a plurality of screw members 41, four in the specific example described, designed to extend through respective through-holes 39a provided within assistant carrier 39 and each one configured to interact with one respective interaction zone 18 of magnet assembly 12.

Furthermore, assistant carrier 39 is configured to engage carrier 2, in particular to engage with guide rails 6 and 7. More specifically, assistant carrier 39 comprises a first side portion 42 and a second side portion 43. In more detail, side portion 42 is adapted to engage with guide rail 6 and side portion 43 is adapted to engage with guide rail 7.

Furthermore, side portions 42 and 43 have respective contact edges 42a and 43a configured to engage with guide rail 6 and 7, respectively. In more detail, contact edges 42a and 43a are designed to contact the respective outer side portions 10 and front portions 8a and 8b of guide rails 6 and 7. In particular, the distance D2 between contact edges 42a and 43a substantially equals outer distance D1.

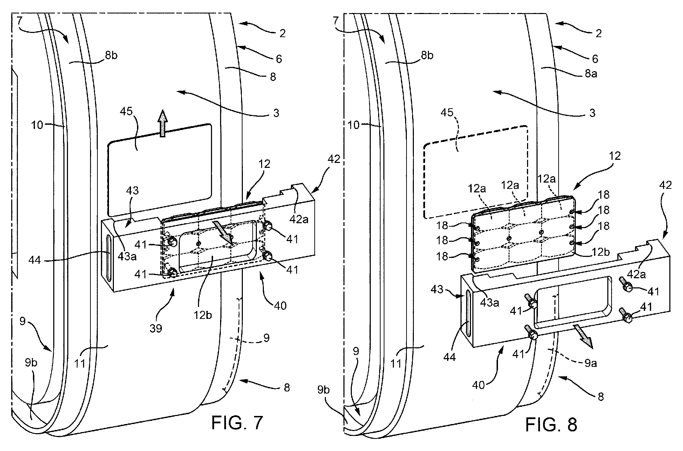

Moreover, assistant carrier 39 comprises lateral slots 44 (only one shown in Figures 7 to 12) configured to facilitate the gripping of assistant carrier 39 by an operator. In particular, slots 44 are provided on side portions 42 and 43.

The placing of magnet assembly 12 on outer surface 3 comprises the step of mounting the respective magnet assembly 12 on assistant carrier 39, in particular by activation of linking means 40, even more particularly by fastening screw members 41. Then, the assistant carrier 39 together with magnet assembly 12 is placed over outer surface 3 so that magnet assembly 12 is spaced apart from outer surface 3 and magnet assembly 12 being arranged substantially between assistant carrier 39 and outer surface 3.

In particular, assistant carrier 39 is placed in such a manner that side portions 42, 43 engage with respectively guide rail 6 and 7. More particularly, the respective contact edges 42a and 43a contact the respective outer portions 10 and the front portions 8a and 8b, respectively. In this way, the position of magnet assembly 12 between guide rails 6 and 7 is unequivocally defined.

Then assistant carrier 39 is disconnected from magnet assembly 12, in particular, by activation of linking members 40, even more particularly by gradually loosening screw members 41 so as that magnet assembly 12 gradually approaches outer surface 3.

After that, assistant carrier 39 is removed from carrier 2.

Preferably, prior to the placement of magnet assembly 12 over outer surface 3, a non-magnetic spacer element 45 is positioned between magnet assembly 12 and outer surface 3 so that magnet assembly 12 placed over outer surface 3 remains distanced from the latter by spacer element 45. In particular, magnet assembly 12 is retained on spacer element 45 by means of magnetic attraction. In particular, magnet assembly 12 is indirectly placed on outer surface 3, in particular on cover 11. Spacer element 45 typically has a plate-like configuration and has a size similar to the size of magnet assembly 12. In the specific example of Figures 9 to 15, spacer element 45 is slightly larger than magnet assembly 12. However, it must be understood that spacer element 45 could also have other sizes which guarantee spacer element 45 to distance magnet assembly 12 from outer surface 3. It must be understood that spacer element 45 could also be used when placing magnet assembly 12 without the use of assistant carrier 39. Thus, prior to or during disconnecting assistant carrier 39 from magnet assembly 12 spacer element 45 is placed between magnet assembly 12 and outer surface 3.

Then, main portion 22 is connected to magnet assembly 12. Favorably, main portion 22 is connected to magnet assembly 12 after removable side portion 23 and additional side portion 24 have been connected to main portion 22. Thus, overall, cart base 13 is connected to main portion 22.

More specifically, connecting means 15 are activated to connect cart base 13, in particular main portion 22, to magnet assembly 12. Even more particularly, connecting means 15 are gradually fastened for connecting cart base 13, in particular main portion 22, with magnet assembly 12 so as to gradually move magnet assembly 12 to cart base 13, in particular main portion 22.

Even more specifically, fixing members 16 are guided through the respective through-holes 17 and brought to interact with interaction zones 18. Then, fixing members 16 are gradually fastened.

Spacer element 45 is removed after or during the connecting of cart base 13 with magnet assembly 12.

Once device 1 is prepared carts 4 can be controlled to advance along carrier 2.

When a change of the configuration of device 1 is needed/desired (e.g. change of number of carts 4, change of the respective operative units 14, etc.) or one or more carts 4 need to be serviced, the carts 4 need to be removed/dismounted from carrier 2.

In the following, the servicing of device 1, as shown in Figures 2 to 8, is described with the example of removing one single cart 4 from device 1. It must be understood that the removal of more than one single cart 4 basically follows the same steps and is, therefore, not specifically described (see Figures 2 to 8).

Cart base 13 is removed from carrier 2 by disconnecting removable side portion 23 from main portion 22 and detaching main portion 22 and removable side portion 23 from carrier 2.

Disconnecting removable side portion 23 from main portion 22 requires activation of coupling means 33, in particular loosening coupling means 33 and moving removable side portion 23 and main portion 22 away from each other. In particular, removable side portion 23 is laterally shifted away for disengaging from guide rail 6.

Even more particularly, removable side portion 23 is disconnected from main portion 22 by loosening fastening members 34 which prior to their loosening interact with one respective fastening zone of main portion 22. In particular, removable side portion 23 is moved away from main portion 22.

Moreover, main portion 22 is laterally shifted and moved away from carrier 2.

Furthermore, additional side portion 24 is preferably detached from carrier 2 together with main portion 22.

In particular, both main portion 22 and additional side portion 24 are laterally shifted for disengaging additional side portion from guide rail 7.

Alternatively, prior to detaching main portion 22 the additional coupling means could be loosened for detaching additional side portion 24 from main portion 22 prior to removing main portion 22 from carrier 2. After loosening of the additional coupling means additional side portion 24 could be laterally shifted away from main portion 22 so as to disengage from guide rail 7. Then main portion 22 could be removed from carrier 2.

Furthermore, favorably, prior to removing cart base 13 from carrier 2, cart base 13, in particular main portion 22 is disconnected from magnet assembly 12 and magnet assembly 12 is left over outer surface 3. Alternatively, cart base 13, in particular main portion 22, could be detached from carrier 2 while being connected to magnet assembly 12.

In more detail, connecting means 15 between cart base 13 and magnet assembly 12 are released, and magnet assembly 12 is left over outer surface 3. More specifically, connecting means 15, in particular fixing members 16, are gradually loosened so as to produce a gradual movement of magnet assembly 12 towards outer surface 3.

Preferably, prior to or during releasing connecting means 15 spacer element 45 is placed between magnet assembly 12 and outer surface 3. By placing spacer element 45 between magnet assembly 12 and outer surface 3, once magnet assembly 12 is left over outer surface 3, magnet assembly 12 is distanced from outer surface 3 by spacer element 45.

Once cart base 13 is removed from carrier 2, magnet assembly 12 left over outer surface 3 is removed from outer surface 3.

More specifically, assistant carrier 39 is placed over magnet assembly 12 and magnet assembly 12 is fastened to assistant carrier 39. Then assistant carrier 39 is removed together with magnet assembly 12. Further on, magnet assembly 12 is released from assistant carrier 39. As well, spacer element 45 interposed between magnet assembly 12 and outer surface 3 is removed during or after fastening of magnet assembly 12.

More specifically, assistant carrier 39 is placed so as to engage with guide rails 6 and 7. Even more particularly, assistant carrier 39 is placed in such a manner that contact edges 42a and 43a engage with the respective outer lateral side portion 10 and the respective front portions 8a and 8b of guide rails 6 and 7, respectively.

Then magnet assembly 12 is fastened onto assistant carrier 39 by activating linking means 40. In particular, screw members 41 are guided through through-holes 39a until screw members 41 interact with the respective interaction zones 18. Then screw members 41 are gradually turned so as to gradually move magnet assembly 12 towards assistant carrier 39 until magnet assembly 12 is completely fastened to assistant carrier 39.

Then assistant carrier 39 is removed and, by loosening of linking means 40, magnet assembly 12 is separated from assistant carrier 39.

The mounting of a new carrier 4 follows the same steps as already described with respect to the preparation of device 1.

The advantages of the method of servicing a linear motor device and/or the method of preparing a linear motor device according to the present invention will be clear from the foregoing description.

Linear motor device 1 having carts 4 can be prepared and serviced in a manner facilitating the maintenance of linear device 1 itself. Additionally, the risk of an operator getting injured during the maintenance (servicing and preparation of linear motor device 1) is limited.

It is of advantage that each cart base 13 has a removable side portion 23 which is removably attachable to the respective main portion 22. This permits to handle main portion 22, the respective additional side portion 24 and the respective operative unit 14 without disconnecting these from each other. Furthermore, during operation of device 1 and advancement of carts 4 these are secured by additional side portion 24 engaging guide rail 7 and removable side portion 23 engaging guide rail 6.

Another advantage lies in the design of cart base 13 being adapted to be removably connected to the magnet assembly 12. This again facilitates the handling of carts 4. This is in particular due to the possibility of independently handling the respective magnet assembly 12 and the cart base 13 of each cart 4. This is of advantage as the magnet assembly 12 due to the associated magnetic field strength exerts a force towards outer surface 3. During the handling of the respective cart base 13 the operator does not need to counteract the force exerted by the respective magnet assembly 12.

It is of further advantage to use assistant carrier 39 for removing or placing magnet assemblies 12, in particular in the case of magnet assemblies 12 with elevated magnetic field strength. The use of assistant carrier 39 is in particular advantageous for magnet assemblies 12 having an elevated magnetic field strength as the stronger the magnetic field strength the safer it becomes for an operator to place magnet assembly 12 over outer surface 3 by use of assistant carrier 12. Thus, the use of assistant carrier 39 allows to limit the risk of the operator of getting injured during the handling of the magnet assembly 12. As well, assistant carrier 39 allows for a defined positioning of magnet assemblies 12 between guide rails 6 and 7.

An even further advantage lies in placing a spacer element 45 between magnet assemblies 12 and outer surface 3 reducing thereby the interaction strength between magnet assemblies 12 and outer surface 3. In particular, in the case of magnet assemblies 12 with elevated magnetic strength it would be hard or even impossible to separate magnet assemblies 12 directly left and/or placed over outer surface 3.

Clearly, changes may be made to device 1, method of servicing device 1 and/or the method of preparing device 1 as described herein without, however, departing from the scope of protection as defined in the accompanying claims.

In an alternative embodiment not shown, assistant carrier 39 may have distance adjusting means for adjusting the distance between side portions 42 and 43, in particular distance D2 between contact edges 42a and 43b. By activation of the distance adjusting means it is possible to adapt assistant carrier 39 to different distances D1 between guide rails 6 and 7.

## Claims

1. Method for servicing a linear motor device (1);
the linear motor device (1) comprising:
- an endless circulating carrier (2) having an outer surface (3); and
- at least one cart (4) comprising a cart base (13) movably and reversibly mounted onto the circulating carrier (2) and adapted to move along the circulating carrier (2);
the cart base (13) comprises a main portion (22) and at least one removable side portion (23) connected to the main portion (22);
the method comprises the steps of:
- disconnecting the removable side portion (23) from the main portion (22);
- detaching the main portion (22) from the circulating carrier (2); and
- detaching the removable side portion (23) from the circulating carrier (2).

2. The method according to claim 1, wherein the step of disconnecting the removable side portion (23) from the main portion (22) of the cart base (13) comprises the steps of:
- loosening coupling means (33) connecting the main portion (22) and the removable side portion (23); and
- moving the removable side portion (23) and the main portion (22) away from each other.

3. The method according to claim 2, wherein the step of loosening the coupling means (33) comprises the step of loosening fastening members (34) of the coupling means (33), each of which interacting with one respective fastening zone provided on the main portion (22) prior to the loosening of the fastening members (34).

4. The method according to any one of the preceding claims, wherein the step of detaching the main portion (22) from the circulating carrier (2) comprises the steps of:
- laterally shifting the main portion (22) in such a manner that the removable side portion (23) disengages the circulating carrier (2) along at least a front portion (8) and along at least a rear portion (9) of the circulating carrier (2); and
- moving the main portion (22) away from the circulating carrier (2)

5. The method according to any one of the preceding claims, wherein the cart base (13) comprises an additional side portion (24) connected to the main portion (22) and being opposite of the at least one removable side portion (23) and configured to carry an operative unit (14) adapted to perform at least one operation;
wherein the additional side portion (24) engages at least a front portion (8) and at least a rear portion (9) of the circulating carrier (2);
wherein the additional side portion (24) is detached from the circulating carrier (2) together with the main portion (22).

6. The method according to any one of the preceding claims, wherein the cart (4) also comprises:
- a magnet assembly (12) adapted to interact with the circulating carrier (2); and
- releasable connecting means (15) coupling the cart base (13) with the magnet assembly (12);
wherein the magnet assembly (12) is interposed between the cart base (13) and the outer surface (3) and being spaced from the outer surface (3);
wherein the method further comprises the step of releasing connecting means (15) between the cart base (13) and the magnet assembly (12) and leaving the magnet assembly (12) over the outer surface (2) prior of detaching the main portion (22) from the circulating carrier (2).

7. The method according to claim 6 further comprising the step of placing a non-magnetic spacer element (45) between the magnet assembly (12) and the outer surface (3) prior to or during the releasing of the connecting means (15).

8. The method according to claim 6 or 7, wherein the step of releasing the connecting means (15) comprises the step of gradually loosening connecting means (15) connecting the cart base (13) with the magnet assembly (12) so as to produce a gradual movement of the magnet assembly (12) towards the outer surface (3).

9. The method according to any one of claims 6 to 8, and further comprising the steps of:
- placing an assistant carrier (39) over the magnet assembly (12);
- fastening the magnet assembly (12) on the assistant carrier (39); and
- removing the assistant carrier (39) together with the magnet assembly (12).

10. The method according to claim 9, and further comprising the step of removing the magnet assembly (12) from the assistant carrier (39) after the step of removing the assistant carrier (39) together with the magnet assembly (12).

11. A method for preparing a linear motor device (1), the linear motor device (1) comprising:
- an endless circulating carrier (2) having an outer surface (3);
- at least one cart (4) configured to be movably mounted to the circulating carrier (2);
wherein the cart (4) comprises a cart base (13) adapted to be movably and reversibly mounted onto the circulating carrier (2);
wherein the cart base (13) comprises a main portion (22) and at least one removable side portion (23) adapted to removably connect to the main portion (22);
the method comprising the steps of:
- placing the main portion (22) onto the circulating carrier (2) in such a manner that the main portion (22) engages the circulation carrier (2); and
- connecting the removable side portion (23) to the main portion (22) so that the removable side portion (23) engages the circulating carrier (2).

12. The method according to claim 11, wherein the step of connecting the removable side portion (23) to the main portion (22) of the cart base (13) comprises the steps of:
- approaching the removable side portion (23) towards the main portion (22); and
- fastening coupling means (33) of the cart base (13) in such a manner that the fastening of coupling means (33) removably connect the main portion (22) and the removable side portion (23) with each other.

13. The method according to claim 12, wherein the step of fastening the coupling means (33) comprises the step of fastening fastening members (34) of the coupling means (33), each of which interacting with one respective fastening zone provided on the main portion (22) after the fastening of the coupling means (33).

14. The method according to any one of claims 11 to 13, wherein the step of placing the main portion (22) on the circulating carrier (2) comprises the steps of:
- approaching the main portion (22) towards the circulating carrier (2) with the main portion (22) being laterally shifted away from the circulating carrier (2); and
- laterally shifting the main portion (22) in such a manner that the removable side portion (23) engages the circulating carrier (2) along at least a front portion (8) and along at least a rear portion (9) of the circulating carrier (2).

15. The method according to any one of claims 11 to 14, wherein the cart base (13) comprises an additional side portion (24) adapted to connect to the main portion (22) opposite to the removable side portion (23) and configured to carry an operative unit (14) adapted to perform at least one operation;
wherein the additional side portion (24) engages at least a front portion (8) and at least a rear portion (9) of the circulating carrier (2); and
wherein the main portion (22) is placed on the circulating carrier (2) together with the additional side portion (24) in such a manner that the additional side portion (24), the main portion (22) and the removable side portion (23) are designed to define a C-shaped configuration of the cart base (13).

16. The method according to any one of claims 11 to 15, wherein the cart (4) further comprises a magnet assembly (12) adapted to interact with the circulating carrier (2);
wherein the cart base (13) is adapted to be removably connected to the magnet assembly (12);
the method further comprising the steps of
- placing the magnet assembly (12) over the outer surface (3);
- arranging the main portion (22) during the step of placing the main portion (22) on the circulating carrier (2) above the magnet assembly (12); and
- connecting the cart base (13) with the magnet assembly (12).

17. The method according to claim 16, wherein the step of placing the magnet assembly (12) over the outer surface (3) comprises the steps of:
- mounting the magnet assembly (12) on an assistant carrier (39);
- placing the assistant carrier (39) with the magnet assembly (12) above the outer surface (3) and with the magnet assembly (12) being spaced apart from the outer surface (3) and the magnet assembly (12) being interposed between the outer surface (3) and the assistant carrier (39);
- disconnecting the assistant carrier (39) from the magnet assembly (12) and leaving the magnet assembly (12) over the outer surface (3); and
- removing the assistant carrier (39).

18. The method according to claim 15 or 16, wherein the step of placing the magnet assembly (12) over the outer surface (4) further comprises the steps of:
- arranging a non-magnetic spacer element (45) between the outer surface (3) and the magnet assembly (12) prior to or during the step of disconnecting the assistant carrier (39) from the magnet assembly (12) and placing the magnet assembly (12) on the spacer element (45); and
- removing the spacer element (45) after or during the connecting of the cart base (13) with the magnet assembly (12).

19. The method according to any one of the claims 16 to 18, wherein the step of connecting the cart base (13) with the magnet assembly (12) comprises the step of gradually fastening connecting means (15) connecting the cart base (13) with the magnet assembly (12) so as to gradually move the magnet assembly (12) to the cart base (13).
